# EUROPEAN PATENT APPLICATION

(11) **EP 4 803 997 A1**
(43) Date of publication of application: **09.09.2026**
(21) Application number: 24884614.9
(22) Date of filing: 25.10.2024
(51) Int. Cl.: G06F 3/0483, G06F 9/451

(54) **INFORMATION DISPLAY METHOD AND APPARATUS, AND ELECTRONIC DEVICE AND STORAGE MEDIUM**

(30) Priority: 02.11.2023 CN 202311451769
(71) Applicant: Beijing Zitiao Network Technology Co., Ltd., Beijing 100190 (CN)
(72) Inventor: DUAN, Ran, Beijing 100028 (CN); JI, Danni, Beijing 100028 (CN); LIU, Delin, Beijing 100028 (CN); KANG, Feiyang, Beijing 100028 (CN)
(74) Representative: Isarpatent
(86) International application number: PCT/CN2024/127510
(87) International publication number: WO 2025/092611

(57) **Abstract**

Provided in the embodiments of the present disclosure are an information display method and apparatus, and an electronic device and a storage medium. The method comprises: receiving a card display operation for a conversation interface (S101); and in response to the card display operation, displaying at least one conversation card in a preset interface, wherein different conversation cards correspond to different conversation interfaces, each conversation card is used for displaying content introduction information of the conversation interface corresponding to the conversation card, and the content introduction information comprises a conversation theme (S102). By means of the new conversation content information display mode provided in the present disclosure, a user can quickly determine the conversation content of a conversation interface by means of displayed content introduction information, such that the time spent on understanding conversation content in a conversation interface is reduced.

## Description

### CROSS-REFERENCE TO RELATED APPLICATION(S)

The present application claims priority to Chinese Patent Application No. 202311451769.0, filed on November 2, 2023 and entitled "INFORMATION DISPLAY METHOD AND APPARATUS, AND ELECTRONIC DEVICE AND STORAGE MEDIUM", which is incorporated herein by reference in its entirety.

### FIELD

Embodiments of the present disclosure relate to the field of computer technologies, and in particular, to an information display method and apparatus, an electronic device, and a storage medium.

### BACKGROUND

Currently, a user may engage in a conversation with another user through a conversation interface in a preset application.

### SUMMARY

Embodiments of the present disclosure provide an information display method and apparatus, an electronic device, and a storage medium, to provide a new manner of displaying conversation content information.

According to a first aspect, an embodiment of the present disclosure provides an information display method. The method includes:
receiving a card display operation for a conversation interface; and
displaying, in response to the card display operation, at least one conversation card in a preset interface, where different conversation cards correspond to different conversation interfaces, the conversation card is used to display content introduction information of the conversation interface corresponding to the conversation card, and the content introduction information includes a conversation theme.

According to a second aspect, an embodiment of the present disclosure further provides an information display apparatus. The apparatus includes:
an operation receiving module configured to receive a card display operation for a conversation interface; and
a card display module configured to display, in response to the card display operation, at least one conversation card in a preset interface, where different conversation cards correspond to different conversation interfaces, the conversation card is used to display content introduction information of the conversation interface corresponding to the conversation card, and the content introduction information includes a conversation theme.

According to a third aspect, an embodiment of the present disclosure further provides an electronic device. The electronic device includes:
one or more processors; and
a memory configured to store one or more programs, where
the one or more programs, when executed by the one or more processors, cause the one or more processors to implement the information display method according to the embodiments of the present disclosure.

According to a fourth aspect, an embodiment of the present disclosure further provides a computer-readable storage medium having stored therein a computer program that, when executed by a processor, causes the information display method according to the embodiments of the present disclosure to be implemented.

According to an information display method and apparatus, an electronic device, and a storage medium provided in the embodiments of the present disclosure, a card display operation for a conversation interface is received; and at least one conversation card is displayed in a preset interface in response to the card display operation, where different conversation cards correspond to different conversation interfaces, the conversation card is used to display content introduction information of the conversation interface corresponding to the conversation card, and the content introduction information includes a conversation theme.

### BRIEF DESCRIPTION OF THE DRAWINGS

The above-mentioned and other features, advantages, and aspects of embodiments of the present disclosure become more apparent with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of an information display method according to an embodiment of the present disclosure;
FIG. 2 is a schematic diagram of display of a preset interface according to an embodiment of the present disclosure;
FIG. 3 is a schematic diagram of display of a conversation card according to an embodiment of the present disclosure;
FIG. 4 is a schematic flowchart of another information display method according to an embodiment of the present disclosure;
FIG. 5 is a schematic diagram of display of another preset interface according to an embodiment of the present disclosure;
FIG. 6 is a structural block diagram of an information display apparatus according to an embodiment of the present disclosure; and
FIG. 7 is a schematic structural diagram of an electronic device according to an embodiment of the present disclosure.

### DETAILED DESCRIPTION OF EMBODIMENTS

Embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are merely used as examples, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different means, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that, unless the context clearly indicates otherwise, the modifiers should be understood as "one or more".

The names of messages or information exchanged between a plurality of means in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

In the related art, conversation content in a conversation interface is displayed in a simplistic manner, and it takes a long time for a user to learn of the conversation content in the conversation interface.

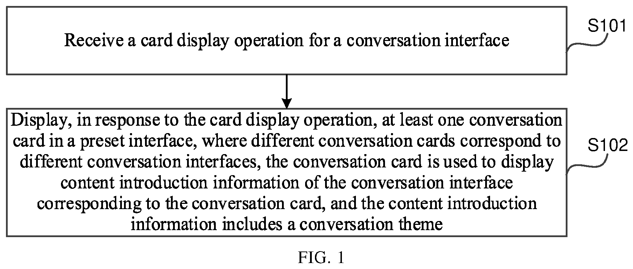

FIG. 1 is a schematic flowchart of an information display method according to an embodiment of the present disclosure. The method may be performed by an information display apparatus, where the apparatus may be implemented by software and/or hardware, and may be configured in an electronic device, typically in a computer, a mobile phone, or a tablet computer. The information display method provided in this embodiment of the present disclosure is applicable to a scenario where content introduction information of a conversation interface is displayed to a user through a conversation card. As shown in FIG. 1, the information display method provided in this embodiment may include the following steps.

S101: A card display operation for a conversation interface is received.

The conversation interface may be an interface for a current conversation object to engage in a conversation with a target conversation object corresponding to the conversation interface. The conversation interface may be used to display conversation content between the current conversation object and the target conversation object corresponding to the conversation interface, such as conversation information sent between the current conversation object and the target conversation object corresponding to the conversation interface. The current conversation object may be a conversation object that engages in a conversation on a current user side, such as a current user or a chatbot used on the current user side. The current user may be a user who performs a card display operation. The target conversation object may be a peer-side conversation object that engages in a conversation with the current conversation object, for example, a user who engages in a conversation with the current conversation object in the conversation interface.

The card display operation may be a trigger operation for indicating to display a conversation card corresponding to at least one conversation interface, and a manner of performing the card display operation is not limited. Optionally, the card display operation includes a first interface display operation for a preset interface. For example, a conversation card may be displayed in a preset interface. In this case, the card display operation may include a trigger operation for indicating to display the conversation card in the preset interface, such as a first interface display operation.

In this embodiment, when intending to view the conversation card corresponding to the at least one conversation interface, the current user may perform the card display operation for the conversation interface. Correspondingly, a current application may receive the card display operation performed by the current user.

S102: In response to the card display operation, at least one conversation card in a preset interface is displayed, where different conversation cards correspond to different conversation interfaces, the conversation card is used to display content introduction information of the conversation interface corresponding to the conversation card, and the content introduction information includes a conversation theme.

The preset interface may be an interface for displaying a conversation card, such as an interface in which the conversation card is displayed. Different conversation cards may correspond to different conversation interfaces, and are used to display content introduction information of the conversation interfaces corresponding thereto.

The content introduction information of the conversation interface may be understood as related information for introducing conversation content in the conversation interface, such as brief introduction information of the conversation content in the conversation interface. The content introduction information of the conversation interface may be generated based on the conversation content in the conversation interface, and a specific generation manner thereof is not limited. The conversation content in the conversation interface may include, for example, all conversation content in the conversation interface, conversation content within a recent preset time length in the conversation interface, or latest n pieces of conversation information in the conversation interface, where n is a positive integer, and a value of n may be set as desired, optionally, n ≥ 2. For example, n may be 10, 20, or the like.

For example, with full authorization from the user, the content introduction information of the conversation interface may include a conversation theme of the conversation interface. The conversation theme may be, for example, a theme in a topic associated with at least part of the conversation content in the conversation interface.

For example, with full authorization from the user, the content introduction information further includes a type identifier of the conversation interface and/or summary information of the conversation content.

The type identifier of the conversation interface may be used to identify an interface type of the conversation interface. A manner of classifying the interface type may be set as desired. For example, the interface type of the conversation interface may be determined based on a conversation theme, a conversation object, conversation time information, and/or an interface attribute of the conversation interface. In this case, optionally, the type identifier includes at least one of an identifier of a theme type corresponding to the conversation theme of the conversation interface, a conversation object classification identifier of the conversation interface, a time classification identifier of the conversation interface, or an attribute identifier of the conversation interface.

The identifier of the theme type corresponding to the conversation theme of the conversation interface may be an identifier of a theme type to which the conversation theme of the conversation interface pertains. The conversation object classification identifier of the conversation interface may be an identifier of a conversation object category in the conversation interface. The time classification identifier of the conversation interface may be an identifier of a time category of conversation time information of the conversation interface. The attribute identifier of the conversation interface may be an identifier of an interface attribute of the conversation interface, and the interface attribute may include, for example, whether the conversation interface is associated with a preset program and/or whether the conversation interface has a preset tag.

Specific manners of classifying the theme type, the conversation object category, and the time category are not limited. For example, the conversation theme may be classified based on content of the conversation theme and the like, to obtain the theme type to which the conversation theme pertains. The target conversation object may be classified based on grouping of the target conversation object and the like, to obtain the conversation object category of the target conversation object. Optionally, the grouping may be determined based on an association relationship with the target conversation object set by the current user. The time classification of the conversation interface may be determined based on send time of a latest conversation message and the like.

The summary information of the conversation content may be content summary information of the conversation content, and may be used to describe main points of the conversation content. The summary information of the conversation content may be obtained based on the conversation content in the conversation interface. It can be understood that the summary information may be set by the user or may be extracted by a client from the conversation content with the authorization from the user.

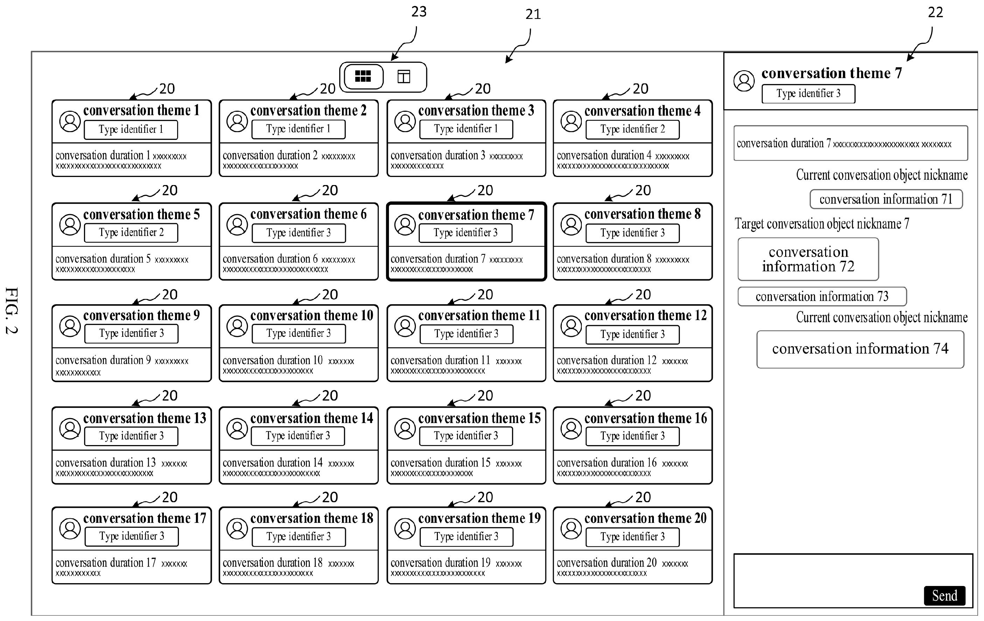

Specifically, as shown in FIG. 2, upon reception of a card display operation for a conversation interface, conversation cards 20 corresponding to at least one conversation interface may be displayed in a preset interface in response to the card display operation, and in each of the conversation cards 20, content introduction information of the conversation interface corresponding to the conversation card 20 is displayed.

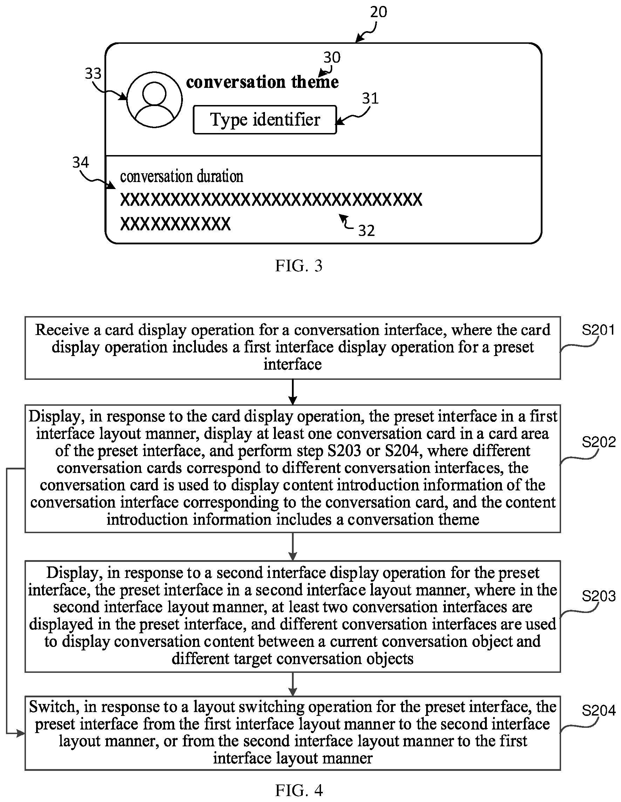

For example, the content introduction information may include a conversation theme 30, a type identifier 31 of the conversation interface, and/or summary information 32 of conversation content. In this case, as shown in FIG. 3, the conversation theme 30 of the conversation interface corresponding to the conversation card 20, the type identifier 31 of the conversation interface corresponding to the conversation card 20, and/or the summary information 32 of conversation content in the conversation interface corresponding to the conversation card 20 may be displayed in the conversation card 20. In addition, an object identifier 33 of a target conversation object of the conversation interface corresponding to the conversation card 20, conversation duration of the conversation interface corresponding to the conversation card 20 this time, and/or the like may be further displayed in the conversation card 20.

It can be understood that the conversation interface may have one or more type identifiers. When the conversation interface has a plurality of type identifiers, different type identifiers may be used to identify types of the conversation interface from different classification dimensions. The classification dimensions may include, for example, a conversation theme, a conversation object, conversation time information, and/or an interface attribute.

In this embodiment, conversation cards corresponding to different types of conversation interfaces may be displayed in the same display style or different display styles. For example, as shown in FIG. 2, conversation cards corresponding to different types of conversation interfaces may be displayed in different display styles, so that the user can quickly determine an interface type of a conversation interface corresponding to a conversation card. In this case, optionally, conversation cards corresponding to different type identifiers have different display styles in the preset interface.

In some implementations, the card display operation includes a first interface display operation for the preset interface, and displaying the at least one conversation card in the preset interface includes: displaying the preset interface in a first interface layout manner, and displaying the at least one conversation card in a card area of the preset interface.

The first interface display operation may be a trigger operation for indicating to display the preset interface in the first interface layout manner. A manner of performing the first interface display operation is not limited. For example, the first interface display operation may include an operation of triggering a first interface display control and the like, where the first interface display control may be used to trigger display of the preset interface in the first interface layout manner.

In the above-mentioned implementation, the preset interface may have different interface layout manners, such as a first interface layout manner and a second interface layout manner. The first interface layout manner may be a card layout manner. In the first interface layout manner, a conversation card corresponding to at least one conversation interface may be displayed in the preset interface. The second interface layout manner may be a conversation interface layout manner. In the second interface layout manner, at least two conversation interfaces may be displayed in the preset interface.

Thus, as shown in FIG. 2, upon reception of the first interface display operation for the preset interface, the preset interface may be displayed in the first interface layout manner, and at least one conversation card 20 may be displayed in a card area 21 of the preset interface.

In addition, with continued reference to FIG. 2, optionally, in the first interface layout manner, the preset interface further includes a conversation area 22, and the conversation area 22 may be used to display a conversation interface, for example, a conversation interface corresponding to a conversation card 20 in a selected state in the card area 21 (e.g., the third conversation card 20 in the second row in FIG. 2), so that the user can view conversation content in the conversation interface.

In some implementations, the information display method provided in this embodiment may further include: displaying, in response to a first trigger operation for a target conversation card in the at least one conversation card, a conversation interface corresponding to the target conversation card in the conversation area, where the conversation interface is used to display conversation content between a current conversation object and a target conversation object corresponding to the conversation interface.

The first trigger operation may be an operation of triggering a conversation card displayed in the conversation area. The target conversation card may be a conversation card corresponding to the first trigger operation, namely a conversation card on which the first trigger operation is performed.

Specifically, as shown in FIG. 2, upon reception of the first trigger operation for the target conversation card, for example, upon detection that a current user triggers the target conversation card displayed in the card area, a conversation interface corresponding to the target conversation card may be displayed in the conversation area, and conversation content between a current conversation object and a target conversation object corresponding to the conversation interface may be displayed in the conversation interface.

In addition, upon reception of the first trigger operation for the target conversation card, the target conversation card may be further displayed in a selected state in the card area, while another conversation card other than the target conversation card in the card area may be displayed in an unselected state, so that the user can quickly determine the conversation card corresponding to the conversation interface currently being viewed.

With continued reference to FIG. 2, optionally, at least part of content introduction information of the conversation interface is further displayed in the conversation interface; and/or conversation interfaces corresponding to different type identifiers have different display styles. For example, at least part of the content introduction information of the conversation interface may be displayed in the top area of the conversation interface. The content introduction information may include, for example, a conversation theme, a type identifier, and/or summary information of the conversation content. Conversation interfaces corresponding to different type identifiers may have different display styles. In other words, conversation interfaces with different interface types may have different display styles, for example, conversation interfaces with different interface types may have different interface backgrounds or interface sizes.

According to the information display method provided in this embodiment, the card display operation for the conversation interface is received; and at least one conversation card is displayed in the preset interface in response to the card display operation, where different conversation cards correspond to different conversation interfaces, the conversation card is used to display the content introduction information of the conversation interface corresponding to the conversation card, and the content introduction information includes the conversation theme. According to the above-mentioned technical solution in this embodiment, content introduction information of a conversation interface is displayed through a conversation card, thereby providing a new manner of displaying conversation content information; meanwhile, the user is enabled to quickly determine the conversation content of the conversation interface through the displayed content introduction information, without viewing the pieces of conversation information in the conversation interface one by one, thereby reducing the time spent on learning of the conversation content in the conversation interface.

FIG. 4 is a schematic flowchart of another information display method according to an embodiment of the present disclosure. The solution in this embodiment may be combined with one or more optional solutions in the above-mentioned embodiment. Optionally, the information display method provided in this embodiment may further include: displaying, in response to a second interface display operation for a preset interface, the preset interface in a second interface layout manner, where in the second interface layout manner, at least two conversation interfaces are displayed in the preset interface, and different conversation interfaces are used to display conversation content between a current conversation object and different target conversation objects; and switching, in response to a layout switching operation for the preset interface, the preset interface from the first interface layout manner to the second interface layout manner, or from the second interface layout manner to the first interface layout manner.

Correspondingly, as shown in FIG. 4, the information display method provided in this embodiment may include the following steps.

S201: A card display operation for a conversation interface is received, where the card display operation includes a first interface display operation for a preset interface.

S202: In response to the card display operation, the preset interface is displayed in a first interface layout manner, at least one conversation card is displayed in a card area of the preset interface, and step S203 or S204 is performed, where different conversation cards correspond to different conversation interfaces, the conversation card is used to display content introduction information of the conversation interface corresponding to the conversation card, and the content introduction information includes a conversation theme.

S203: In response to a second interface display operation for the preset interface, the preset interface is displayed in a second interface layout manner, where in the second interface layout manner, at least two conversation interfaces are displayed in the preset interface, and different conversation interfaces are used to display conversation content between a current conversation object and different target conversation objects.

The second interface display operation may be a trigger operation for indicating to display the preset interface in the second interface layout manner. A manner of performing the second interface display operation is not limited. For example, the second interface display operation may include an operation of triggering a second interface display control and the like, where the second interface display control may be used to trigger display of the preset interface in the second interface layout manner. In the second interface layout manner, at least two conversation interfaces may be displayed in the preset interface, and different conversation interfaces may be used to display the conversation content between the current conversation object and different target conversation objects.

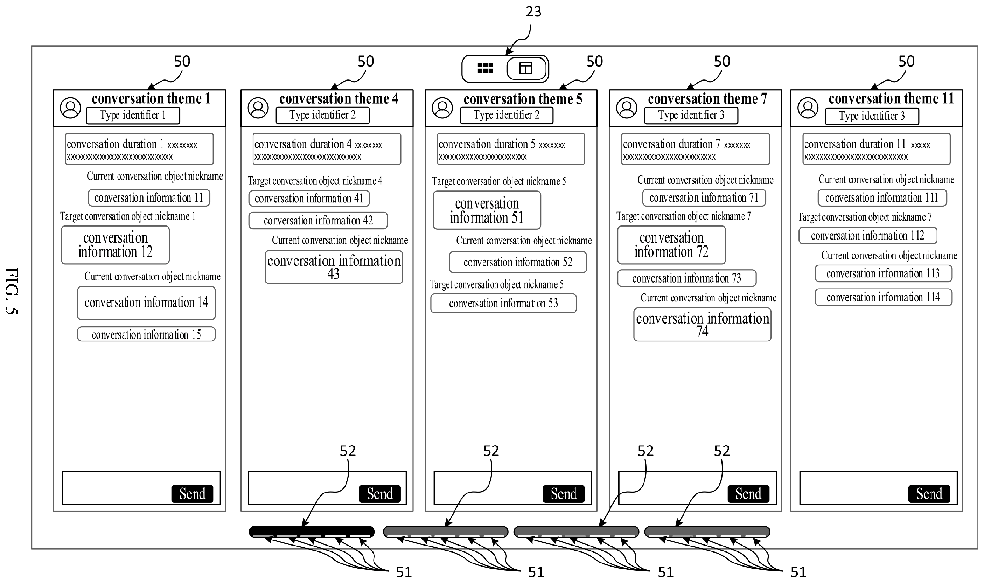

For example, as shown in FIG. 5, upon reception of the second interface display operation for the preset interface, the preset interface may be displayed in the second interface layout manner. For example, at least two conversation interfaces 50 may be displayed in the preset interface, and in each conversation interface 50, conversation content between the current conversation object and the target conversation object corresponding to the conversation interface 50 may be displayed, so that the user can quickly browse the conversation content in different conversation interfaces.

S204: In response to a layout switching operation for the preset interface, the preset interface is switched from the first interface layout manner to the second interface layout manner, or from the second interface layout manner to the first interface layout manner.

The layout switching operation may be a trigger operation for indicating to switch an interface layout of the preset interface. A manner of performing the layout switching operation is not limited. For example, the layout switching operation may be an operation of triggering a control or a preset gesture operation performed within the preset interface. Optionally, a layout switching control is further displayed in the preset interface, and the layout switching control is used to trigger execution of the layout switching operation.

In this embodiment, upon reception of the layout switching operation for the preset interface, the interface layout manner of the preset interface may be switched, so as to meet a requirement of the user for viewing the conversation content in different interface layout manners.

Specifically, upon reception of the layout switching operation for the preset interface, for example, upon detection that a current user triggers a layout switching control 23 displayed in the preset interface (as shown in FIG. 2 and FIG. 3), the preset interface may be switched from the first interface layout manner to the second interface layout manner, or from the second interface layout manner to the first interface layout manner.

For example, as shown in FIG. 2, in a case where the preset interface is currently displayed in the first interface layout manner, upon detection that the current user triggers the layout switching control 23 in the preset interface, the preset interface may be switched from the first interface layout manner to the second interface layout manner, as shown in FIG. 5.

For another example, as shown in FIG. 5, in a case where the preset interface is currently displayed in the second interface layout manner, upon detection that the current user triggers the layout switching control 23 in the preset interface, the preset interface may be switched from the second interface layout manner to the first interface layout manner, as shown in FIG. 2.

In addition, with continued reference to FIG. 2 and FIG. 5, when the preset interface is displayed in different interface layout manners, the layout switching control 23 may have different display styles, so that the current interface layout manner for the preset interface is indicated through the display style of the layout switching control 23.

In this embodiment, in the first interface layout manner and/or the second interface layout manner, the preset interface may include at least two sub-interfaces. For example, as shown in FIG. 5 (type identifier distribution controls 51 displayed in the preset interface in the second interface layout manner are used as an example in FIG. 5), type identifier distribution controls 51 corresponding to each sub-interface may be further displayed in the preset interface. In this case, optionally, the preset interface includes at least two sub-interfaces, and type identifier distribution controls corresponding to the at least two sub-interfaces are further displayed in the preset interface.

The type identifier distribution controls corresponding to a sub-interface may correspond to conversation interfaces displayed in the sub-interface, and are used to indicate distribution, in the sub-interface, of type identifiers of the conversation interfaces displayed in the sub-interface. For example, the type identifier distribution controls corresponding to a sub-interface may be used to indicate type identifiers corresponding to conversation interfaces displayed in the sub-interface, and may further indicate a display order of the conversation interfaces in the sub-interface. For example, an order of the type identifier distribution controls corresponding to a sub-interface may be consistent with the display order of the corresponding conversation interfaces in the sub-interface.

In this embodiment, the order of the type identifier distribution controls may be set as desired. Optionally, the type identifier distribution controls are sorted based on conversation time or a conversation object. For example, the type identifier distribution controls may be sorted based on conversation duration, a priority of a time classification identifier of a corresponding conversation interface, and/or a priority of a conversation object classification identifier of the corresponding conversation interface, and the type identifier distribution controls may be displayed in the preset interface based on the ordering result.

With continued reference to FIG. 5 (an example in which type identifier distribution controls corresponding to different type identifiers have different display colors is used in FIG. 5), optionally, type identifier distribution controls corresponding to different type identifiers have different display styles, where the different display styles include different display colors and/or different display shapes. The type identifier corresponding to a type identifier distribution control may be a type identifier of a conversation interface corresponding to the type identifier distribution control. Different type identifier distribution controls may have different display styles, for example, different display colors and/or different display shapes, so that the user can quickly determine the type identifier corresponding to the type identifier distribution control through the display style of the type identifier distribution control, and further determine the type identifier of the conversation interface corresponding to the type identifier distribution control.

In some implementations, as shown in FIG. 5, when the preset interface includes at least two sub-interfaces, interface controls 52 corresponding to the at least two sub-interfaces may be further displayed in the preset interface, and the interface control 52 may be used to trigger display of a corresponding sub-interface of the preset interface. For example, upon detection that the current user triggers an interface control 52 displayed in the preset interface, a sub-interface corresponding to the interface control 52 triggered by the current user may be displayed.

In this embodiment, a display location of the type identifier distribution control 51 in the preset interface is not limited. For example, when the interface control 52 is displayed in the preset interface, the type identifier distribution control 51 may be displayed within the interface control 52 of a sub-interface corresponding to the type identifier distribution control 51. The sub-interface corresponding to the type identifier distribution control 51 may be understood as a sub-interface in which the conversation interface corresponding to the type identifier distribution control 51 is displayed. For example, a type identifier distribution control 51 corresponding to a conversation interface displayed in a sub-interface may be displayed in an interface control 52 corresponding to the sub-interface. In this case, optionally, interface controls corresponding to the at least two sub-interfaces are further displayed in the preset interface, the type identifier distribution control is displayed within an interface control of a corresponding sub-interface, and the sub-interface corresponding to the interface control is used to display a conversation interface corresponding to the type identifier distribution control included in the interface control.

In some implementations, the information display method provided in this embodiment may further include at least one of the following: displaying, in response to a second trigger operation for a target type identifier distribution control, a target sub-interface corresponding to the target type identifier distribution control; displaying, in response to a third trigger operation for the target type identifier distribution control, an aggregated display interface of a conversation interface corresponding to a target type identifier, where the target type identifier is a type identifier corresponding to the target type identifier distribution control; or displaying, in response to a fourth trigger operation for the target type identifier distribution control, a conversation interface corresponding to the target type identifier distribution control.

The target type distribution control may be a type identifier distribution control triggered by the current user.

The second trigger operation may be a trigger operation for indicating to display a sub-interface corresponding to the target type identifier distribution control. The third trigger operation may be a trigger operation for indicating to display an aggregated display interface of a conversation interface whose type identifier is a type identifier corresponding to the target type identifier distribution control. The fourth trigger operation may be a trigger operation for indicating to display the conversation interface corresponding to the target type identifier. The second trigger operation, the third trigger operation, and the fourth trigger operation may be trigger operations performed on a type distribution control displayed in the preset interface. The second trigger operation, the third trigger operation, and the fourth trigger operation may be performed in different manners and/or have different response areas. An example in which the second trigger operation, the third trigger operation, and the fourth trigger operation are performed in different manners is used. For example, the second trigger operation may include a long press operation, the third trigger operation may include a slide operation or a drag operation, and/or the fourth trigger operation may include a tap operation.

The target sub-interface may be a sub-interface corresponding to the target type identifier distribution control, for example, a sub-interface in which the conversation interface corresponding to the target type identifier distribution control is displayed. The target type identifier may be a type identifier corresponding to the target type identifier distribution control. An aggregated display interface of a conversation interface corresponding to a type identifier (e.g., the target type identifier) may be used to display, in an aggregation manner, a conversation interface corresponding to the type identifier, for example, at least part of the conversation interface whose type identifier is the type identifier.

In the above-mentioned implementation, the type identifier distribution control may be used to trigger display of the corresponding sub-interface, the aggregated display interface of the conversation interface of the corresponding type identifier, and/or the corresponding conversation interface, thereby further enriching the function of the type identifier distribution control, and meeting a requirement of the user for viewing different conversation interfaces.

For example, upon reception of a second trigger operation for a type identifier distribution control, a sub-interface corresponding to the type identifier distribution control may be displayed in response to the third trigger operation; upon reception of a third trigger operation for a type identifier distribution control, an aggregated display interface of a conversation interface corresponding to a type identifier corresponding to the type identifier distribution control may be displayed in response to the third trigger operation, and a conversation interface whose type identifier is the type identifier corresponding to the type identifier distribution control may be displayed in the aggregated display interface; and upon reception of a fourth trigger operation for a type identifier distribution control, a conversation interface corresponding to the type identifier distribution control may be displayed in response to the fourth trigger operation.

In the above-mentioned implementation, when the target sub-interface corresponding to the target type identifier distribution control is displayed in response to the second trigger operation, the conversation interface corresponding to the target type identifier distribution control and a conversation interface in the target sub-interface other than the conversation interface corresponding to the target type identifier may be displayed in the same display style or in different display styles.

For example, the conversation interface corresponding to the target type identifier distribution control and the conversation interface in the target sub-interface other than the conversation interface corresponding to the target type identifier may be displayed in different display styles, so that the user can quickly determine the conversation interface corresponding to the target type identifier distribution control triggered by the user. For example, the conversation interface corresponding to the target type identifier distribution control is displayed in a first display style in the target sub-interface, and/or one or more conversation interfaces in the target sub-interface other than the conversation interface corresponding to the target type identifier are displayed in a second display style in the target sub-interface. The first display style and the second display style may be different display styles. For example, the first display style and the second display style may correspond to different interface display backgrounds and/or interface display sizes. The conversation interface corresponding to the target type identifier distribution control and the conversation interface in the target sub-interface other than the conversation interface corresponding to the target type identifier may be displayed in the target sub-interface at the same time or at different times.

In this case, optionally, displaying the target sub-interface corresponding to the target type identifier distribution control includes: displaying the target sub-interface corresponding to the target type identifier distribution control, displaying the conversation interface corresponding to the target type identifier distribution control in the target sub-interface in a first display style, and/or displaying a conversation interface in the target sub-interface other than the conversation interface corresponding to the target type identifier distribution control in a second display style.

The information display method provided in this embodiment enables the user to switch the interface layout manner of the preset interface, and to view different related information of the conversation interface in different interface layout manners. This can further enrich a manner of displaying the conversation interface and simplify operations required for the user to browse or learn of the conversation content in the conversation interface.

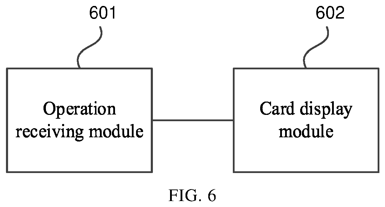

FIG. 6 is a structural block diagram of an information display apparatus according to an embodiment of the present disclosure. The apparatus may be implemented by software and/or hardware, and may be configured in an electronic device, typically in a computer, a mobile phone, or a tablet computer. The apparatus may perform the information display method to display content introduction information of a conversation interface to a user through a conversation card. As shown in FIG. 6, the information display apparatus provided in this embodiment may include: an operation receiving module 601 and a card display module 602.

The operation receiving module 601 is configured to receive a card display operation for a conversation interface.

The card display module 602 is configured to display, in response to the card display operation, at least one conversation card in a preset interface, where different conversation cards correspond to different conversation interfaces, the conversation card is used to display content introduction information of the conversation interface corresponding to the conversation card, and the content introduction information includes a conversation theme.

According to the information display apparatus provided in this embodiment, the card display operation for the conversation interface is received through the operation receiving module; and at least one conversation card is displayed, through the card display module, in the preset interface in response to the card display operation, where different conversation cards correspond to different conversation interfaces, the conversation card is used to display the content introduction information of the conversation interface corresponding to the conversation card, and the content introduction information includes the conversation theme. According to the above-mentioned technical solution in this embodiment, content introduction information of a conversation interface is displayed through a conversation card, thereby providing a new manner of displaying conversation content information; meanwhile, the user is enabled to quickly determine the conversation content of the conversation interface through the displayed content introduction information, without viewing the pieces of conversation information in the conversation interface one by one, thereby reducing the time spent on learning of the conversation content in the conversation interface.

In the above-mentioned solution, the content introduction information may further include a type identifier of the conversation interface and/or summary information of conversation content.

In the above-mentioned solution, the type identifier may include at least one of an identifier of a theme type corresponding to the conversation theme of the conversation interface, a conversation object classification identifier of the conversation interface, a time classification identifier of the conversation interface, or an attribute identifier of the conversation interface.

In the above-mentioned solution, conversation cards corresponding to different type identifiers may have different display styles in the preset interface.

In the above-mentioned solution, the card display operation may include a first interface display operation for a preset interface, and the card display module 602 may be configured to: display the preset interface in a first interface layout manner, and display at least one conversation card in a card area of the preset interface.

In the above-mentioned solution, in the first interface layout manner, the preset interface may further include a conversation area, and the information display apparatus provided in this embodiment may further include: a first interface display module configured to display, in response to a first trigger operation for a target conversation card in the at least one conversation card, a conversation interface corresponding to the target conversation card in the conversation area, where the conversation interface is used to display conversation content between a current conversation object and a target conversation object corresponding to the conversation interface.

Further, the information display apparatus provided in this embodiment may further include: an interface display module configured to display, in response to a second interface display operation for a preset interface, the preset interface in a second interface layout manner, where in the second interface layout manner, at least two conversation interfaces are displayed in the preset interface, and different conversation interfaces are used to display conversation content between a current conversation object and different target conversation objects; and a layout switching module configured to switch, in response to a layout switching operation for the preset interface, the preset interface from the first interface layout manner to the second interface layout manner, or from the second interface layout manner to the first interface layout manner.

In the above-mentioned solution, the preset interface may include at least two sub-interfaces, type identifier distribution controls corresponding to the at least two sub-interfaces may be further displayed in the preset interface, and the information display apparatus provided in this embodiment may further include at least one of the following: a sub-interface display module configured to display, in response to a second trigger operation for a target type identifier distribution control, a target sub-interface corresponding to the target type identifier distribution control; an aggregated display module configured to display, in response to a third trigger operation for the target type identifier distribution control, an aggregated display interface of a conversation interface corresponding to a target type identifier, where the target type identifier is a type identifier corresponding to the target type identifier distribution control; or a second interface display module configured to display, in response to a fourth trigger operation for the target type identifier distribution control, a conversation interface corresponding to the target type identifier distribution control.

In the above-mentioned solution, the type identifier distribution controls may be sorted based on conversation time or a conversation object.

In the above-mentioned solution, type identifier distribution controls corresponding to different type identifiers may have different display styles, and the different display styles may include different display colors and/or different display shapes.

In the above-mentioned solution, interface controls corresponding to the at least two sub-interfaces may be further displayed in the preset interface, the type identifier distribution control may be displayed within an interface control of a corresponding sub-interface, and the sub-interface corresponding to the interface control may be used to display a conversation interface corresponding to the type identifier distribution control included in the interface control.

In the above-mentioned solution, the sub-interface display module may be configured to: display the target sub-interface corresponding to the target type identifier distribution control, display the conversation interface corresponding to the target type identifier distribution control in the target sub-interface in a first display style, and/or display a conversation interface in the target sub-interface other than the conversation interface corresponding to the target type identifier distribution control in a second display style.

In the above-mentioned solution, a layout switching control may be further displayed in the preset interface, and the layout switching control may be used to trigger execution of the layout switching operation.

In the above-mentioned solution, at least part of content introduction information of the conversation interface may be further displayed in the conversation interface; and/or conversation interfaces corresponding to different type identifiers may have different display styles.

The information display apparatus provided in this embodiment of the present disclosure can perform the information display method provided in any one of the embodiments of the present disclosure, and has corresponding functional modules for performing the information display method and beneficial effects. For the technical details not described in detail in this embodiment, reference may be made to the information display method provided in any one of the embodiments of the present disclosure.

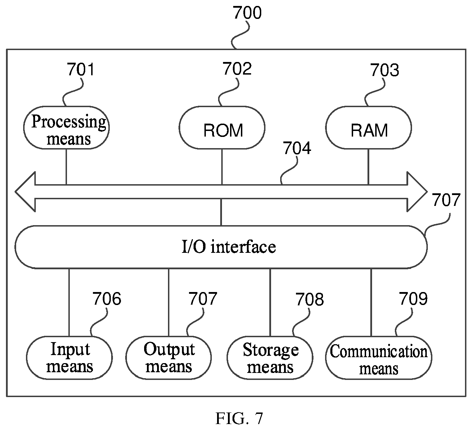

Reference is made to FIG. 7 below, which is a schematic structural diagram of an electronic device (e.g., a terminal device) 700 suitable for implementing an embodiment of the present disclosure. A terminal device in this embodiment of the present disclosure may include, but is not limited to, mobile terminals such as a mobile phone, a notebook computer, a digital broadcast receiver, a personal digital assistant (PDA), a PAD (tablet computer), a portable multimedia player (PMP), and a vehicle-mounted terminal (e.g., a vehicle navigation terminal), and fixed terminals such as a digital TV and a desktop computer. The electronic device shown in FIG. 7 is merely an example, and shall not impose any limitation on the function and scope of use of the embodiments of the present disclosure.

As shown in FIG. 7, the electronic device 700 may include a processing means (for example, a central processing unit or a graphics processing unit) 701 that may perform a variety of appropriate actions and processing in accordance with a program stored in a read-only memory (ROM) 702 or a program loaded from a storage means 708 into a random-access memory (RAM) 703. The RAM 703 further stores various programs and data required for the operation of the electronic device 700. The processing means 701, the ROM 702, and the RAM 703 are connected to one another through a bus 704. An input/output (I/O) interface 705 is also connected to the bus 704.

Generally, the following means may be connected to the I/O interface 705: an input means 706 including, for example, a touchscreen, a touchpad, a keyboard, a mouse, a camera, a microphone, an accelerometer, and a gyroscope; an output means 707 including, for example, a liquid crystal display (LCD), a speaker, and a vibrator; the storage means 708 including, for example, a magnetic tape and a hard disk drive; and a communication means 709. The communication means 709 may allow the electronic device 700 to perform wireless or wired communication with other devices to exchange data. Although FIG. 7 shows the electronic device 700 having various means, it should be understood that it is not required to implement or have all of the shown means. It may be an alternative to implement or have more or fewer means.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication means 709, installed from the storage means 708, or installed from the ROM 702. When the computer program is executed by the processing means 701, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

In some implementations, a client and a server may communicate using any currently known or future-developed network protocol such as the hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above-mentioned computer-readable medium may be included in the above-mentioned electronic device. Alternatively, the computer-readable medium may exist independently, without being assembled into the electronic device.

The computer-readable medium carries one or more programs that, when executed by the electronic device, cause the electronic device to: receive a card display operation for a conversation interface; and display, in response to the card display operation, at least one conversation card in a preset interface, where different conversation cards correspond to different conversation interfaces, the conversation card is used to display content introduction information of the conversation interface corresponding to the conversation card, and the content introduction information includes a conversation theme.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a module does not constitute a limitation on the unit itself in some cases.

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, Example 1 provides an information display method. The method includes:
receive a card display operation for a conversation interface; and
displaying, in response to the card display operation, at least one conversation card in a preset interface, where different conversation cards correspond to different conversation interfaces, the conversation card is used to display content introduction information of the conversation interface corresponding to the conversation card, and the content introduction information includes a conversation theme.

According to one or more embodiments of the present disclosure, Example 2 is based on the method of Example 1, where the content introduction information further includes a type identifier of the conversation interface and/or summary information of the conversation content.

According to one or more embodiments of the present disclosure, Example 3 is based on the method of Example 2, where the type identifier includes at least one of an identifier of a theme type corresponding to the conversation theme of the conversation interface, a conversation object classification identifier of the conversation interface, a time classification identifier of the conversation interface, or an attribute identifier of the conversation interface.

According to one or more embodiments of the present disclosure, Example 4 is based on the method of Example 2, where conversation cards corresponding to different type identifiers have different display styles in the preset interface.

According to one or more embodiments of the present disclosure, Example 5 is based on the method of Example 1, where the card display operation includes a first interface display operation for the preset interface, and displaying the at least one conversation card in the preset interface includes:
displaying the preset interface in a first interface layout manner, and displaying the at least one conversation card in a card area of the preset interface.

According to one or more embodiments of the present disclosure, Example 6 is based on the method of Example 5, where in the first interface layout manner, the preset interface further includes a conversation area, and the method further includes:
displaying, in response to a first trigger operation for a target conversation card in the at least one conversation card, a conversation interface corresponding to the target conversation card in the conversation area, where the conversation interface is used to display conversation content between a current conversation object and a target conversation object corresponding to the conversation interface.

According to one or more embodiments of the present disclosure, Example 7 is based on the method of Example 5. The method further includes:
displaying, in response to a second interface display operation for a preset interface, the preset interface in a second interface layout manner, where in the second interface layout manner, at least two conversation interfaces are displayed in the preset interface, and different conversation interfaces are used to display conversation content between a current conversation object and different target conversation objects; and
switching, in response to a layout switching operation for the preset interface, the preset interface from the first interface layout manner to the second interface layout manner, or from the second interface layout manner to the first interface layout manner.

According to one or more embodiments of the present disclosure, Example 8 is based on the method of Example 7, where the preset interface includes at least two sub-interfaces, type identifier distribution controls corresponding to the at least two sub-interfaces are further displayed in the preset interface, and the method further includes at least one of the following:
displaying, in response to a second trigger operation for a target type identifier distribution control, a target sub-interface corresponding to the target type identifier distribution control;
displaying, in response to a third trigger operation for the target type identifier distribution control, an aggregated display interface of a conversation interface corresponding to a target type identifier, where the target type identifier is a type identifier corresponding to the target type identifier distribution control; or
displaying, in response to a fourth trigger operation for the target type identifier distribution control, a conversation interface corresponding to the target type identifier distribution control.

According to one or more embodiments of the present disclosure, Example 9 is based on the method of Example 8, where the type identifier distribution controls are sorted according to conversation time or a conversation object.

According to one or more embodiments of the present disclosure, Example 10 is based on the method of Example 8, where type identifier distribution controls corresponding to different type identifiers have different display styles, where the different display styles include different display colors and/or different display shapes.

According to one or more embodiments of the present disclosure, Example 11 is based on the method of Example 8, where interface controls corresponding to the at least two sub-interfaces are further displayed in the preset interface, the type identifier distribution control is displayed within an interface control of a corresponding sub-interface, and the sub-interface corresponding to the interface control is used to display a conversation interface corresponding to the type identifier distribution control included in the interface control.

According to one or more embodiments of the present disclosure, Example 12 is based on the method of Example 8, where displaying the target sub-interface corresponding to the target type identifier distribution control includes:
displaying the target sub-interface corresponding to the target type identifier distribution control, displaying the conversation interface corresponding to the target type identifier distribution control in the target sub-interface in a first display style, and/or displaying a conversation interface in the target sub-interface other than the conversation interface corresponding to the target type identifier distribution control in a second display style.

According to one or more embodiments of the present disclosure, Example 13 is based on the method of Example 7, where a layout switching control is further displayed in the preset interface, and the layout switching control is used to trigger execution of the layout switching operation.

According to one or more embodiments of the present disclosure, Example 14 is based on the method of Example 6 or Example 7, where at least part of content introduction information of the conversation interface is further displayed in the conversation interface; and/or conversation interfaces corresponding to different type identifiers have different display styles.

According to one or more embodiments of the present disclosure, Example 15 provides an information display apparatus. The apparatus includes:
an operation receiving module configured to receive a card display operation for a conversation interface; and
a card display module configured to display, in response to the card display operation, at least one conversation card in a preset interface, where different conversation cards correspond to different conversation interfaces, the conversation card is used to display content introduction information of the conversation interface corresponding to the conversation card, and the content introduction information includes a conversation theme.

According to one or more embodiments of the present disclosure, Example 16 provides an electronic device. The electronic device includes:
one or more processors; and
a memory configured to store one or more programs, where
the one or more programs, when executed by the one or more processors, cause the one or more processors to implement the information display method according to any one of Examples 1 to 14.

According to one or more embodiments of the present disclosure, Example 17 provides a computer-readable storage medium having stored therein a computer program, where the program, when executed by a processor, causes the information display method according to any one of Examples 1 to 14 to be implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. An information display method, comprising:
receiving a card display operation for a conversation interface; and
displaying, in response to the card display operation, at least one conversation card in a preset interface, wherein different conversation cards correspond to different conversation interfaces, the conversation card is used to display content introduction information of the conversation interface corresponding to the conversation card, and the content introduction information comprises a conversation theme.

2. The method according to claim 1, wherein the content introduction information further comprises a type identifier of the conversation interface and/or summary information of conversation content.

3. The method according to claim 2, wherein the type identifier comprises at least one of an identifier of a theme type corresponding to the conversation theme of the conversation interface, a conversation object classification identifier of the conversation interface, a time classification identifier of the conversation interface, or an attribute identifier of the conversation interface.

4. The method according to claim 2, wherein conversation cards corresponding to different type identifiers have different display styles in the preset interface.

5. The method according to claim **1,** wherein the card display operation comprises a first interface display operation for the preset interface, and displaying the at least one conversation card in the preset interface comprises:
displaying the preset interface in a first interface layout manner, and displaying the at least one conversation card in a card area of the preset interface.

6. The method according to claim 5, wherein in the first interface layout manner, the preset interface further comprises a conversation area, and the method further comprises:
displaying, in response to a first trigger operation for a target conversation card in the at least one conversation card, a conversation interface corresponding to the target conversation card in the conversation area, wherein the conversation interface is used to display conversation content between a current conversation object and a target conversation object corresponding to the conversation interface.

7. The method according to claim 5, further comprising:
displaying, in response to a second interface display operation for a preset interface, the preset interface in a second interface layout manner, wherein in the second interface layout manner, at least two conversation interfaces are displayed in the preset interface, and different conversation interfaces are used to display conversation content between a current conversation object and different target conversation objects; and
switching, in response to a layout switching operation for the preset interface, the preset interface from the first interface layout manner to the second interface layout manner, or from the second interface layout manner to the first interface layout manner.

8. The method according to claim 7, wherein the preset interface comprises at least two sub-interfaces, type identifier distribution controls corresponding to the at least two sub-interfaces are further displayed in the preset interface, and the method further comprises at least one of the following:
displaying, in response to a second trigger operation for a target type identifier distribution control, a target sub-interface corresponding to the target type identifier distribution control;
displaying, in response to a third trigger operation for the target type identifier distribution control, an aggregated display interface of a conversation interface corresponding to a target type identifier, wherein the target type identifier is a type identifier corresponding to the target type identifier distribution control; or
displaying, in response to a fourth trigger operation for the target type identifier distribution control, a conversation interface corresponding to the target type identifier distribution control.

9. The method according to claim 8, wherein the type identifier distribution controls are sorted based on conversation time or a conversation object.

10. The method according to claim 8, wherein type identifier distribution controls corresponding to different type identifiers have different display styles, and the different display styles comprise different display colors and/or different display shapes.

11. The method according to claim 8, wherein interface controls corresponding to the at least two sub-interfaces are further displayed in the preset interface, the type identifier distribution control is displayed within an interface control of a corresponding sub-interface, and the sub-interface corresponding to the interface control is used to display a conversation interface corresponding to the type identifier distribution control comprised in the interface control.

12. The method according to claim 8, wherein displaying the target sub-interface corresponding to the target type identifier distribution control comprises:
displaying the target sub-interface corresponding to the target type identifier distribution control, displaying the conversation interface corresponding to the target type identifier distribution control in the target sub-interface in a first display style, and/or displaying a conversation interface in the target sub-interface other than the conversation interface corresponding to the target type identifier distribution control in a second display style.

13. The method according to claim 7, wherein a layout switching control is further displayed in the preset interface, and the layout switching control is used to trigger execution of the layout switching operation.

14. The method according to claim 6 or 7, wherein at least part of content introduction information of the conversation interface is further displayed in the conversation interface; and/or conversation interfaces corresponding to different type identifiers have different display styles.

15. An information display apparatus, comprising:
an operation receiving module configured to receive a card display operation for a conversation interface; and
a card display module configured to display, in response to the card display operation, at least one conversation card in a preset interface, wherein different conversation cards correspond to different conversation interfaces, the conversation card is used to display content introduction information of the conversation interface corresponding to the conversation card, and the content introduction information comprises a conversation theme.

16. An electronic device, comprising:
at least one processor; and
a memory communicatively connected to the at least one processor, wherein
the memory has stored therein a computer program executable by the at least one processor, and the computer program, when executed by the at least one processor, causes the at least one processor to perform the information display method according to any of claims 1 to 14.

17. A computer-readable storage medium, wherein the computer-readable storage medium has computer instructions stored therein that, when executed by a processor, cause the information display method according to any of claims 1 to 14 to be implemented.
